# EUROPEAN PATENT SPECIFICATION

(11) **EP 3 293 312 B1**
(45) Date of publication and mention of the grant of the patent: **04.12.2019**
(21) Application number: 16188666.8
(22) Date of filing: 13.09.2016
(51) Int. Cl.: E02D 27/42, F16M 11/36, E04H 12/18, F16M 11/04, F16M 11/18

(54) **ANCHORAGE TRIPOD REPLACEABLE FOOT SOLE**
AUSWECHSELBARE FUSSSOHLE EINER STATIVVERANKERUNG
SEMELLE PLANTAIRE REMPLAÇABLE DE TRÉPIED D'ANCRAGE

(43) Date of publication of application: 14.03.2018
(73) Proprietor: Honeywell International Inc., Morris Plains, NJ 07950 (US)
(72) Inventor: HROUZEK, Jan, Morris Plains, NJ New Jersey 07950 (US); SVOBODA, Radim, Morris Plains, NJ New Jersey 07950 (US)
(74) Representative: Hutchison, James

(56) References cited:
- CN-U- 203 963 425
- FR-A1- 2 575 147
- US-A- 4 660 679
- US-A1- 2012 168 593

## Description

### FIELD

This disclosure relates to anchorage systems for raising and lowering a worker to and from a worksite, and more particularly, to tripod devices that provide an anchor for raising and lowering a worker into and out of a manhole.

### BACKGROUND

Tripod devices that create an anchor for raising and lowering a worker into a manhole or other worksite are known. Such tripod devices conventionally have a foot that is pivot mounted to each of the three legs, with the foot having a resilient sole, typically rubber, that is permanently fixed to a rigid frame via a nonreleasable fastener such as by rivets or via glue or other nonreleasable bonding. One problem with many current foot designs is that they have proven to be less robust than the remainder of the tripod system and can be damaged or worn to the point where they must be replaced as a unit. In this regard, it is often the resilient sole that is damaged, such as by being torn or by becoming partially separated from the rigid frame or by simply wearing down to the point where it is no longer reliable.

US2012/0168593A1 describes a kinematic platform including lower spherical joints at lower ends of linear actuators, the lower spherical joints allowing the linear actuators to move with respect to respective joint housings. FR2575147A1 describes a variable-height tripod including an extendable mast and an anti-slip pad provided at the lower end of each leg. CN203963425U describes a tripod including threads at lower ends of legs that allow for spikes, rubber feet, or nails to be fixed to the lower ends of the legs.

US4660679A describes a tripod utilized over a manhole to aid in the introduction or removal of a workman or equipment into the hole, comprising a housing, three legs and a foot for every leg.

### SUMMARY

The invention is set out in accordance with the appended claims. In accordance with one feature of this disclosure, a tripod system is disclosed for supporting the weight of a worker during entry to and exit from a worksite beneath the tripod system. The tripod system includes a central frame, three support legs extending from the frame, each of the legs being pivot mounted to the frame, and a foot attached to each leg. Each foot includes a rigid frame attached to the corresponding leg, a replaceable sole attached to a bottom facing surface of the frame, and at least one releasable fastener attaching the sole to the frame.

In one feature, a foot for a tripod system is provided for supporting the weight of a worker during entry to and exit from a worksite beneath the tripod system. The tripod system includes a central frame, three support legs extending from the frame, and an anchor component supported by the frame and the legs and is configured to anchor a worker during entry and exit from a worksite beneath the tripod system. The foot is attachable to each of the legs and includes a rigid frame attached to the corresponding leg, a replaceable sole attached to a bottom facing surface of the frame, and at least one releasable fastener attaching the sole to the frame.

As one feature, the foot further comprises a sole plate with the sole sandwiched between the frame and the sole plate.

In one feature, the at least one releasable fastener engages the sole plate to sandwich the sole between the sole plate and the frame.

According to one feature, the at least one releasable fastener is a threaded fastener and the sole plate comprises at least one threaded bore that receives the at least one threaded fastener. As a further feature, the sole plate comprises at least one rivet nut defining the at least one threaded bore.

In one feature, the at least one releasable fastener of each foot is a pair of threaded fasteners and wherein the sole plate comprises a pair of threaded bores with each of the threaded bores receiving a corresponding one of the threaded fasteners. According to a further feature, the sole plate comprises a pair of rivet nuts, with each rivet nut defining one of the threaded bores.

As one feature, the sole plate is received in a recess formed in a bottom surface of the sole.

In one feature, the sole includes a groove in an upper surface of the sole that receives the frame. In a further feature, the groove conforms to the shape of the frame received in the groove.

In accordance with one feature, the sole and the frame include mating, locating features that are engaged with each other to locate the sole relative to the frame.

As one feature, the sole includes a pair of pass through openings that allow the rivet nuts to pass through the sole and that are closely conforming to an exterior surface of the rivet nuts to provide additional structural support to the sole.

It should be understood that this disclosure contemplates that any combination of the above features may be utilized in a foot for an anchorage tripod including the foot according to this disclosure.

Other features and advantages will become apparent from a review of the entire specification, including the appended claims and drawings.

### BRIEF DESCRIPTION OF THE DRAWINGS

Fig. 1 is an isometric view of a tripod system having feet with a replaceable sole according to this disclosure;
Fig. 2 is an enlarged view of one of the feet of Fig. 1;
Fig. 3 is an isometric view from above of one of the feet shown in Figs. 1 and 2 according to this disclosure;
Fig. 4 is a section view taken along line 4-4 in Fig. 3;
Fig. 5 is an exploded view of the foot shown in Figs. 1-4; and
Fig. 6 is an exploded view of a component of the foot of Figs. 1-5.

### DETAILED DESCRIPTION

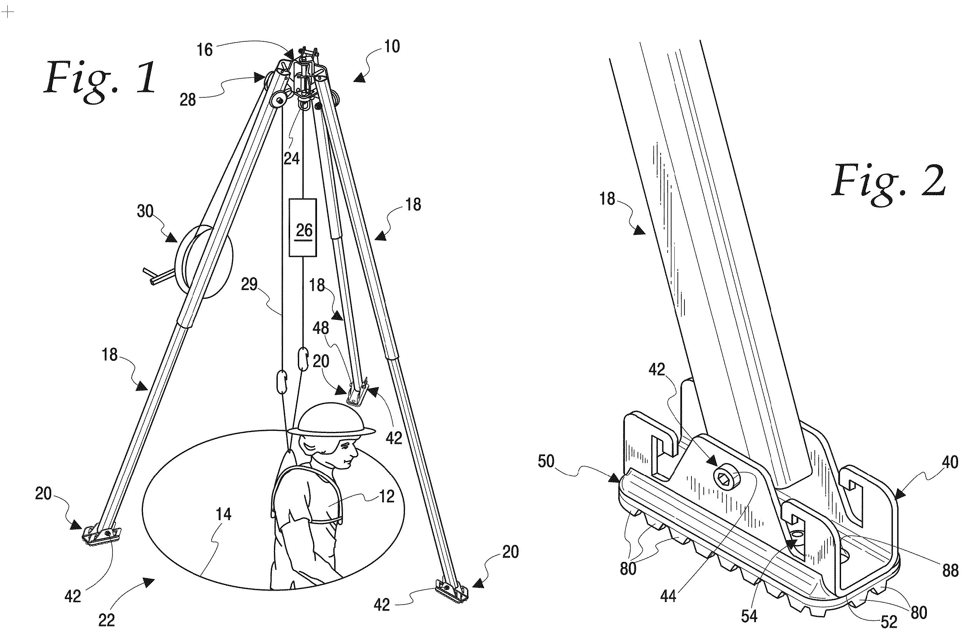

With reference to Fig. 1, a tripod system 10 is shown for supporting the weight of a worker 12 during entry and exit from a worksite 14 (typically a manhole) located beneath the tripod system 10. The tripod system 10 includes a central frame 16, three support legs 18 extending from the frame 16, with each of the legs 18 being pivot mounted to the frame 16, and a foot 20 attached to each leg 18 to support the tripod system 10 on the surface 22 adjacent the worksite 14. In the illustrated embodiment, each of the legs 18 is a telescoping leg 18. It should be understood that the telescoping features of each of the legs 18 is a strictly optional feature.

The tripod system 10 further includes a first anchorage component 24 in the form of a weight bearing D-ring or the like for providing an anchor point to a fall protection device 26, such as a self-retracting lifeline or shock absorbing lanyard, that extends from the anchorage component 24 to the worker 12. In the illustrated embodiment, the system 10 further includes an additional anchorage component 28 in the form of a pulley that directs a weight bearing cable or line 29 from a winch 30 to the worker 12 for raising and lowering the worker 12 in and out of a worksite.

Further, details of the tripod components 16, 18, 24, 28 and 30 are not critical to an understanding of the tripod foot 20 disclosed herein. Furthermore, although a specific form of each of the tripod components 16, 18, 24, 28 and 30 is shown, it should be understood that many suitable forms for each of these components are known and may be desirable depending upon the particular application for the tripod system 10. Accordingly, no limitations to specific geometries or forms for these components is intended unless expressly recited in the appended claims.

Each foot 20 includes a rigid frame 40 that is attached to the corresponding leg 18 via a pivot connection 42, which in the illustrated embodiment is a shouldered, threaded fastener 44 that is received in corresponding openings or bores (not shown) in each of the legs 18 and a pair of holes 46 in each of the frames 40, and is secured by a mating lock nut 48 engaged against an opposite side of the frame 40. It should be appreciated that while a specific type of pivot connection 42 is described and illustrated herein, any suitable pivot connection can be utilized according to this disclosure. Accordingly, no limitation to the specific type or form of pivot connection is intended unless expressly recited in one of the appended claims. As best seen in Figs. 2-4, each foot 20 further comprises a replaceable sole 50 that is attached to a bottom facing surface 52 of the frame 40 by a pair of releasable fasteners 54, which in the illustrated embodiment are shown in the form of a pair of threaded fasteners 54 that attach the sole 50 to the frame 40. In the illustrated embodiment, a load washer 55 and a lock washer 56 are sandwiched between an upper surface 57 of the frame 50 and a head 58 of each of the threaded fasteners 54, but it should be understood that in some applications it may be desirable to eliminate or one or both of the washers 55 and 56.

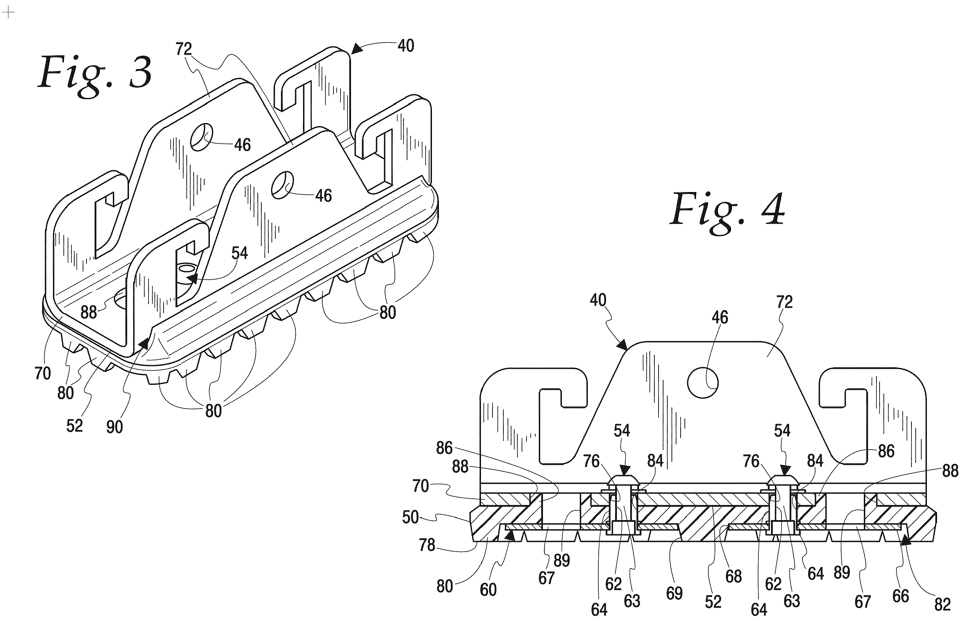

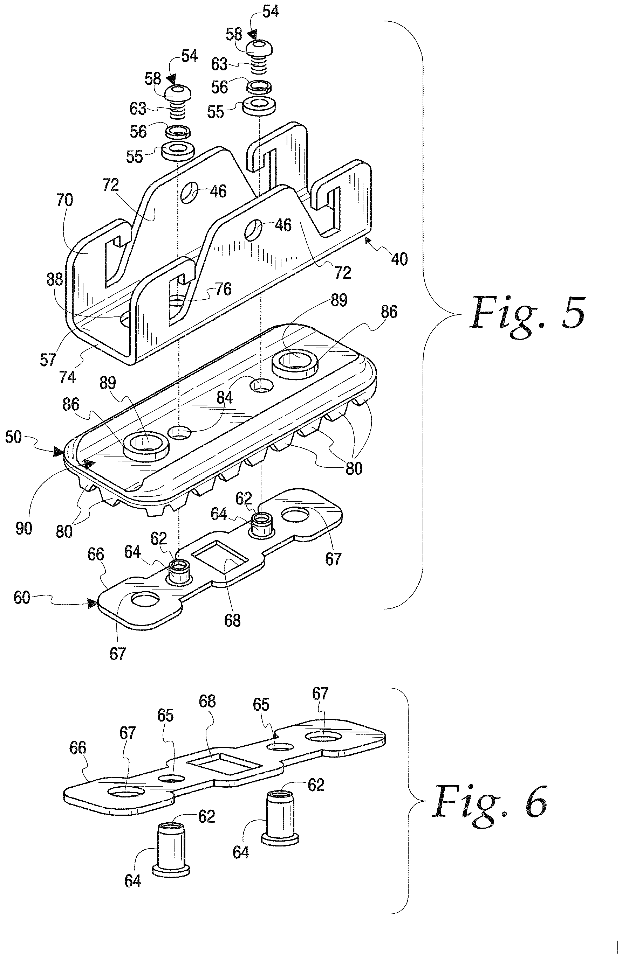

As best seen in Figs. 4 and 5, each foot 20 further includes a sole plate 60, with the sole 50 being sandwiched between the frame 40 and the sole plate 60 and the releasable fasteners 54 engaged with the sole plate 60 to sandwich the sole 50 between the sole plate 60 and the frame 40. In this regard, in the illustrated embodiment, the sole plate 60 includes a pair of threaded bores 62, with each bore 62 receiving the threaded shaft 63 one of the threaded fasteners 54 and being defined by a rivet nut 64 that is permanently fixed to a rigid plate member 66 of the sole plate 60. In this regard, as best seen in Fig. 6, each rivet nut 64 is received in a conforming hole 65 of the rigid plate member 66 and is then permanently fixed to the plate member 66 via deformation of the metal of the rivet nut 64. As best seen in Figs. 5 and 6, in the illustrated embodiment, the plate member 66 of the sole plate 60 has a generally rectangular shape with a length sized to extend over substantially the length of the sole 50 in order to provide superior support for the sole 50. The plate member includes two cylindrical openings 67 and a rectangular opening 68, with the rectangular opening 68 receiving a closely conforming, downwardly extending locating feature 69 of the sole 50. The components of the illustrated sole plate 60 are made from a metal or other suitable rigid material. It should be understood that while the illustrated sole plate 60 will be desirable in many applications, in some applications it may be desirable for other forms and/or geometries to be utilized for the sole plate 60. For example, while the rivet nuts 64 are desirable for many applications and form a fabrication with the unitary piece of metal 66, in some applications, it may be desirable for the sole plate 60 to be a one-piece casting or a one-piece machining, with the threaded bores 62 being formed in the one-piece casting or machining rather than using the rivet nuts 64 or other components to provide the threaded bores 62.

It should be appreciated that while a specific type of threaded fastener 54 has been shown, other types of threaded fasteners may be desirable depending upon the particular application. Similarly, while rivet nuts 64 are shown, other suitable structures may be desirable for defining the threaded bores 62 that receive the threaded fasteners 54. Furthermore, while threaded fasteners will be highly desirable in many applications, it is possible that in some applications other types of releasable fasteners, such as a snap button-type fastener, a cam fastener, or other suitable releasable fastener will be desirable. It should be appreciated that while the illustrated foot 20 includes a sole plate 60 for receiving the threaded fasteners 54 and for providing excellent structural support to the sole 50, in some applications it may be desirable for the sole plate 60 to be eliminated and for the threaded fasteners 54 simply being engaged with a pair of threaded members, such as threaded nuts, with suitable washers sandwiched between the nuts and the bottom of the sole 50. Similarly, if other types of releasable fasteners are utilized, it may be desirable to provide a different mating structure for that type of releasable fastener rather than the sole plate 60.

In the illustrated embodiment, the frame 40 is formed from a unitary piece of metal 70 or other suitable material and includes a pair of side walls 72 extending vertically upward from a base wall 74 with a pair of openings or holes 76 that allow the threaded fasteners 54 to pass through the base wall 70. It should be appreciated that while a specific form of the frame 40 has been shown in the illustrated embodiment and will be desirable in many applications, in some applications it may be desirable for other forms and/or geometries to be utilized for the frame 40. For example, in some applications it may be desirable for only a single releasable fastener 54 to be utilized, or for more than two releasable fasteners 54 to be utilized, in which case the frame 40 would either have a single hole 76 in the base wall 74 or more than two holes 76 in the base wall 74. Similarly, while the illustrated frame 40 is shown as a one-piece, unitary structure, in some applications it may be desirable for the frame 40 to be a multi-piece assembly or fabrication.

In the illustrated embodiment, the sole 50 includes a downwardly facing surface 78 having treads 80, and a recess 82 that is shaped to receive the sole plate 60 so that the sole plate 60 is spaced above any surface 22 upon which the treads 80 of the sole 60 rest. The sole 60 further includes a pair of pass through holes 84 that allow the rivet nuts 64 to pass upwardly through the sole 60. The sole 60 further includes a pair of location features, in the form of cylindrical walls 86 that are received in corresponding cylindrical-shaped openings 88 in the bottom wall 70 of the frame 40. The openings 67 in the base plate 60 are located so that they align with cylindrical openings 89 centered in the walls 86. As best seen in Fig. 5, the sole 50 further includes an upwardly facing groove or channel 90 that receives the base wall 70 and the lowermost portions of the side walls 68 of the frame 40. In the illustrated embodiment, the channel 90 is shaped to conform to the shape of the base wall 70 in the lowermost portions of the side wall 68, the openings 84 are shaped to closely conform to the cylindrical outer surfaces of the rivet nut 64, and the openings 88 are shaped to closely conform to the cylindrical walls 86. It should be appreciated that each of these features provide an enhanced structural support for the sole 50 in comparison to conventional feet of existing tripod systems. It is desirable for the sole 50 to be made from a resilient material, such as rubber, and in the illustrated embodiment the sole 50 is molded of a suitable rubber or reinforced rubber material.

Again, as with the frame 40, it should be understood that while a specific form of the sole 50 has been shown in the illustrated embodiments, other forms are possible and may be desirable depending upon each particular application for the tripod system 10. For example, as discussed above in connection with the frame 40, in some designs it may be desirable for a single releasable fastener 54 to be utilized, or for multiple releasable fasteners 54 to be utilized, in which case a single pass through opening 84 or additional pass through openings 84 would need to be provided in the sole 50. As a further example, while the closely conforming channel 90 in the sole 60 is desirable in many applications, in some applications it may be desirable for the sole 60 to not have a channel. As yet another example, while the cylindrical walls 86 mating with the openings 88 will be desirable in many applications, in some applications it may be desirable to eliminate these features.

It should be appreciated that while a specific embodiment of the foot 20 has been illustrated and described herein, this disclosure contemplates other geometries, shapes and forms for the foot 20 and its components. Accordingly, no limitations to specific forms, shapes, geometries, etc. is intended unless expressly recited in one of the appended claims.

## Claims

1. A foot (20) for a tripod system (10) for supporting the weight of a worker (12) during entry to and exit from a worksite (14) beneath the tripod system (10), the tripod system (10) including a central frame (16), three support legs (18) extending from the frame (16), and an anchor component (24,28) supported by the frame (16) and the legs (18) and configured to anchor a worker during entry and exit from a worksite (14) beneath the tripod system (10), the foot (20) being attachable to one of the legs (18) and comprising:
a rigid frame (40) attachable to one corresponding leg (18);
**characterized in that**, a replaceable sole (50) is attached to a bottom facing surface (52) of the frame (40); and
at least one releasable fastener (54) is attaching the sole (50) to the frame (40).

2. A foot (20) for a tripod system (10) of claim 1 wherein the foot (20) further comprises a sole plate (60), with the sole (50) sandwiched between the frame (40) and the sole plate (60).

3. A foot (20) for a tripod system (10) of claim 2 wherein the at least one releasable fastener (54) engages the sole plate (60) to sandwich the sole (50) between the sole plate (60) and the frame (40).

4. A foot (20) for a tripod system (10) of claim 3 wherein the at least one releasable fastener (54) is a threaded fastener (54) and the sole plate (60) comprises at least one threaded bore (62) that receives the at least one threaded fastener (54).

5. A foot (20) for a tripod system (10) of claim 4 wherein the sole plate (60) comprises at least one rivet nut (64) defining the at least one threaded bore (62).

6. A foot (20) for a tripod system (10) of claim 2 wherein the at least one releasable fastener (54) of is a pair of threaded fasteners (54) and wherein the sole plate (60) comprises a pair of threaded bores (62) with each of the threaded bores (62) receiving a corresponding one of the threaded fasteners (54).

7. A foot (20) for a tripod system (10) of any of claims 1-6 wherein the sole plate (60) is received in a recess (82) formed in a bottom surface (78) of the sole (50).

8. A tripod system (10) for supporting the weight of a worker (12) during entry to and exit from a worksite (14) beneath the tripod system (10), the tripod system (10) comprising:
a central frame (16);
three support legs (18) extending from the frame (16), each of the legs (18) being pivot mounted to the frame (16); and
a foot (20) according to any preceding claim.

9. The tripod system (10) of claim 8 wherein each foot (20) further comprises a sole plate (60), with the sole (50) sandwiched between the frame (40) and the sole plate (60).

10. The tripod system (10) of claim 9 wherein the at least one releasable fastener (54) engages the sole plate (60) to sandwich the sole (50) between the sole plate (60) and the frame (40).

11. The tripod system (10) of claim 10 wherein the at least one releasable fastener (54) is a threaded fastener (54) and the sole plate (60) comprises at least one threaded bore (62) that receives the at least one threaded fastener (54).

12. The tripod system (10) of claim 11 wherein the sole plate (60) comprises at least one rivet nut (64) defining the at least one threaded bore (62).

13. The tripod system (10) of claim 9 wherein the at least one releasable fastener (54) of each foot (20) is a pair of threaded fasteners (54) and wherein the sole plate (60) comprises a pair of threaded bores (62) with each of the threaded bores (62) a corresponding one of the threaded fasteners (54).

14. The tripod system (10) of claim 13 wherein the sole plate (60) comprises a pair of rivet nuts (64), with each rivet nut (64) defining one of the threaded bores (62).

15. The tripod system (10) of any of claims 9-14 wherein the sole plate (60) is received in a recess (82) formed in a bottom surface (78) of the sole (50).

## Patentansprüche

1. Fuß (20) für ein Stativsystem (10) zum Tragen des Gewichts eines Arbeiters (12) während des Betretens und Verlassens einer Arbeitsstelle (14) unterhalb des Stativsystems (10), wobei das Stativsystem (10) einen Mittelrahmen (16), drei Stützbeine (18), die sich vom Rahmen (16) erstrecken, und eine Ankerkomponente (24, 28), die vom Rahmen (16) und den Beinen (18) getragen wird und dazu ausgelegt ist, einen Arbeiter beim Betreten und Verlassen einer Arbeitsstelle (14) unterhalb des Stativsystems (10) zu verankern, enthält, wobei der Fuß (20) an einem der Beine (18) verankert werden kann und Folgendes umfasst:
einen steifen Rahmen (40), der an einem zugehörigen Bein (18) befestigt werden kann;
**dadurch gekennzeichnet, dass** eine austauschbare Sohle (50) an einer dem Boden zugewandten Fläche (52) des Rahmens (40) befestigt ist; und
wobei mindestens ein lösbares Verbindungselement (54), die Sohle (50) am Rahmen (40) befestigt.

2. Fuß (20) für ein Stativsystem (10) nach Anspruch 1, wobei der Fuß (20) ferner eine Sohlenplatte (60) umfasst, wobei die Sohle (50) zwischen dem Rahmen (40) und der Sohlenplatte (60) angeordnet ist.

3. Fuß (20) für ein Stativsystem (10) nach Anspruch 2, wobei das mindestens eine lösbare Verbindungselement (54) in die Sohlenplatte (60) eingreift, um die Sohle (50) zwischen der Sohlenplatte (60) und dem Rahmen (40) anzuordnen.

4. Fuß (20) für ein Stativsystem (10) nach Anspruch 3, wobei das mindestens eine lösbare Verbindungselement (54) ein mit einem Gewinde versehenes Verbindungselement (54) ist und die Sohlenplatte (60) mindestens eine Gewindebohrung (62) umfasst, die das mindestens eine mit einem Gewinde versehene Verbindungselement (54) aufnimmt.

5. Fuß (20) für ein Stativsystem (10) nach Anspruch 4, wobei die Sohlenplatte (60) mindestens eine Blindnietmutter (64) umfasst, die die mindestens eine Gewindebohrung (62) definiert.

6. Fuß (20) für ein Stativsystem (10) nach Anspruch 2, wobei das mindestens eine lösbare Verbindungselement (54) ein Paar mit einem Gewinde versehener Verbindungselemente (54) ist und wobei die Sohlenplatte (60) ein Paar Gewindebohrungen (62) umfasst, wobei jede der Gewindebohrungen (62) jeweils ein zugehöriges der mit einem Gewinde versehenen Verbindungselemente (54) aufnimmt.

7. Fuß (20) für ein Stativsystem (10) nach einem der Ansprüche 1-6, wobei die Sohlenplatte (60) in einer Aussparung (82) aufgenommen wird, die in einer Bodenfläche (78) der Sohle (50) ausgebildet ist.

8. Stativsystem (10) zum Tragen des Gewichts eines Arbeiters (12) beim Betreten und Verlassen einer Arbeitsstelle (14) unterhalb des Stativsystems (10), wobei das Stativsystem (10) Folgendes umfasst:
einen Mittelrahmen (16);
drei Stützbeine (18), die sich vom Rahmen (16) erstrecken, wobei jedes der Beine (18) verschwenkbar am Rahmen (16) montiert ist; und
einen Fuß (20) nach einem der vorstehenden Ansprüche.

9. Stativsystem (10) nach Anspruch 8, wobei jeder Fuß (20) ferner eine Sohlenplatte (60) umfasst, wobei die Sohle (50) zwischen dem Rahmen (40) und der Sohlenplatte (60) angeordnet ist.

10. Stativsystem (10) nach Anspruch 9, wobei das mindestens eine lösbare Verbindungselement (54) in die Sohlenplatte (60) eingreift, um die Sohle (50) zwischen der Sohlenplatte (60) und dem Rahmen (40) anzuordnen.

11. Stativsystem (10) nach Anspruch 10, wobei das mindestens eine lösbare Verbindungselement (54) ein mit einem Gewinde versehenes Verbindungselement (54) ist und die Sohlenplatte (60) mindestens eine Gewindebohrung (62) umfasst, die das mindestens eine mit einem Gewinde versehene Verbindungselement (54) aufnimmt.

12. Stativsystem (10) nach Anspruch 11, wobei die Sohlenplatte (60) mindestens eine Blindnietmutter (64) umfasst, die die mindestens eine Gewindebohrung (62) definiert.

13. Stativsystem (10) nach Anspruch 9, wobei das mindestens eine lösbare Verbindungselement (54) jedes Fußes (20) ein Paar mit einem Gewinde versehener Verbindungselemente (54) ist und wobei die Sohlenplatte (60) ein Paar Gewindebohrungen (62) umfasst, wobei jede der Gewindebohrungen (62) jeweils ein zugehöriges der mit einem Gewinde versehenen Verbindungselemente (54) aufnimmt.

14. Stativsystem (10) nach Anspruch 13, wobei die Sohlenplatte (60) ein Paar Blindnietmuttern (64) umfasst, wobei jede Blindnietmutter (64) eine der Gewindebohrungen (62) definiert.

15. Stativsystem (10) nach einem der Ansprüche 9-14, wobei die Sohlenplatte (60) in einer Aussparung (82) aufgenommen wird, die in einer Bodenfläche (78) der Sohle (50) ausgebildet ist.

## Revendications

1. Pied (20) pour un système de trépied (10) destiné à supporter le poids d'un ouvrier (12) pendant l'entrée sur et la sortie d'un chantier (14) sous le système de trépied (10), le système de trépied (10) comprenant un cadre central (16), trois jambes de support (18) s'étendant à partir du cadre (16), et un composant d'ancrage (24, 28) supporté par le cadre (16) et les jambes (18) et conçu pour ancrer un ouvrier pendant l'entrée sur et la sortie d'un chantier (14) sous le système de trépied (10), le pied (20) pouvant être fixé à l'une des jambes (18) et comprenant :
un cadre rigide (40) pouvant être fixé à une jambe correspondante (18) ;
**caractérisé en ce qu'**une semelle remplaçable (50) est fixée à une surface orientée vers le bas (52) du cadre (40) ; et
au moins un dispositif de fixation détachable (54) fixe la semelle (50) au cadre (40).

2. Pied (20) pour un système de trépied (10) selon la revendication 1, dans lequel le pied (20) comprend en outre une plaque de base (60), la semelle (50) étant prise en sandwich entre le cadre (40) et la plaque de base (60).

3. Pied (20) pour un système de trépied (10) selon la revendication 2, dans lequel l'au moins un dispositif de fixation détachable (54) vient en prise avec la plaque de base (60) pour prendre en sandwich la semelle (50) entre la plaque de base (60) et le cadre (40).

4. Pied (20) pour un système de trépied (10) selon la revendication 3, dans lequel l'au moins un dispositif de fixation détachable (54) est un dispositif de fixation fileté (54) et la plaque de base (60) comprend au moins un alésage fileté (62) qui reçoit l'au moins un dispositif de fixation fileté (54).

5. Pied (20) pour un système de trépied (10) selon la revendication 4, dans lequel la plaque de base (60) comprend au moins un écrou riveté (64) définissant l'au moins un alésage fileté (62).

6. Pied (20) pour un système de trépied (10) selon la revendication 2, dans lequel l'au moins un dispositif de fixation détachable (54) fait partie d'une paire de dispositifs de fixation filetés (54) et dans lequel la plaque de base (60) comprend une paire d'alésages filetés (62), chacun des alésages filetés (62) recevant l'un correspondant des dispositifs de fixation filetés (54).

7. Pied (20) pour un système de trépied (10) selon l'une quelconque des revendications 1 à 6, dans lequel la plaque de base (60) est reçue dans un évidement (82) formé dans une surface inférieure (78) de la semelle (50) .

8. Système de trépied (10) destiné à supporter le poids d'un ouvrier (12) pendant l'entrée sur et la sortie d'un chantier (14) sous le système de trépied (10), le système de trépied (10) comprenant :
un cadre central (16) ;
trois jambes de support (18) s'étendant à partir du cadre (16), chacune des jambes (18) étant montée pivotante sur le cadre (16) ; et
un pied (20) selon l'une quelconque des revendications précédentes.

9. Système de trépied (10) selon la revendication 8, dans lequel chaque pied (20) comprend en outre une plaque de base (60), la semelle (50) étant prise en sandwich entre le cadre (40) et la plaque de base (60).

10. Système de trépied (10) selon la revendication 9, dans lequel l'au moins un dispositif de fixation détachable (54) vient en prise avec la plaque de base (60) pour prendre en sandwich la semelle (50) entre la plaque de base (60) et le cadre (40).

11. Système de trépied (10) selon la revendication 10, dans lequel l'au moins un dispositif de fixation détachable (54) est un dispositif de fixation fileté (54) et la plaque de base (60) comprend au moins un alésage fileté (62) qui reçoit l'au moins un dispositif de fixation fileté (54) .

12. Système de trépied (10) selon la revendication 11, dans lequel la plaque de base (60) comprend au moins un écrou riveté (64) définissant l'au moins un alésage fileté (62).

13. Système de trépied (10) selon la revendication 9, dans lequel l'au moins un dispositif de fixation détachable (54) de chaque pied (20) est une paire de dispositifs de fixation filetés (54) et dans lequel la plaque de base (60) comprend une paire d'alésages filetés (62), chacun des alésages filetés (62) recevant l'un correspondant des dispositifs de fixation filetés (54).

14. Système de trépied (10) selon la revendication 13, dans lequel la plaque de base (60) comprend une paire d'écrous rivetés (64), chaque écrou riveté (64) définissant l'un des alésages filetés (62).

15. Système de trépied (10) selon l'une quelconque des revendications 9 à 14, dans lequel la plaque de base (60) est reçue dans un évidement (82) formé dans une surface inférieure (78) de la semelle (50).
